(19) Europäisches Patentamt
European Patent Office
Office européen des brevets

(11) EP 0 592 861 B1

(12) **EUROPEAN PATENT SPECIFICATION**

(45) Date of publication and mention
of the grant of the patent:
**29.12.1997 Bulletin 1997/52**

(51) Int Cl.6: **G11B 23/12**, G11B 15/70, G11B 5/86

(21) Application number: **93115625.1**

(22) Date of filing: **28.09.1993**

(54) **Endless master video tape container for use with video tape duplicator**

Endloser Muttervideobandbehälter für Gebrauch mit Videobandkopierer

Récipient de bande mère vidéo sans fin pour utilisation avec dispositif de copie de bande

(84) Designated Contracting States:
**DE ES FR GB IT NL**

(30) Priority: **13.10.1992 JP 71266/92 U**

(43) Date of publication of application:
**20.04.1994 Bulletin 1994/16**

(73) Proprietor: **Sony Precision Technology Inc.**
**Shinagawa-ku Tokyo (JP)**

(72) Inventors:
• **Uehara, Seigo**
**Fujisawa City, Kanagawa Prefecture (JP)**
• **Takao, Yoshiki**
**Chigawaki City, Kanagawa Prefecture (JP)**

(74) Representative: **Grünecker, Kinkeldey,**
**Stockmair & Schwanhäusser Anwaltssozietät**
**Maximilianstrasse 58**
**80538 München (DE)**

(56) References cited:
**DE-A- 3 736 915**      **DE-U- 8 706 716**
**GB-A- 2 219 428**      **US-A- 3 072 311**
**US-A- 3 733 019**      **US-A- 4 128 198**

## Description

The present invention relates to an endless tape container according to the preamble part of claim 1.

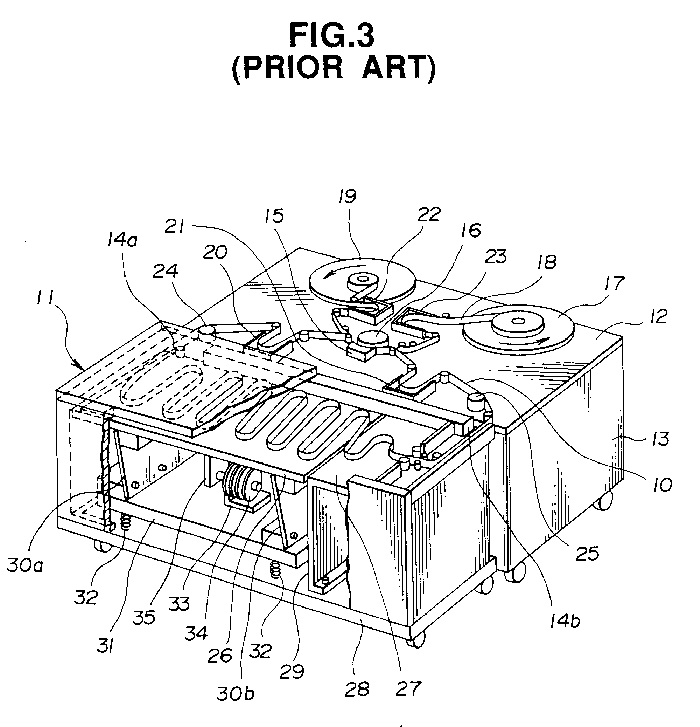

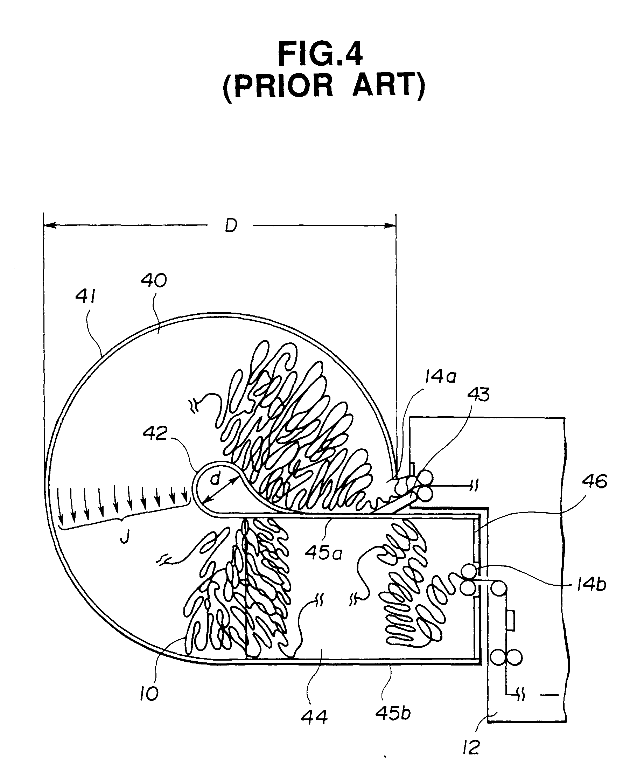

GB-A-2 219 428 discloses a rectangular container which is vibrated by a vibrator for carrying the tape along a straight passage in the container from a tape inlet port toward a tape outlet port, and the latter publication shows a discal container which is also vibrated by a vibrator for carrying the tape along an arcuate passage in the container toward a tape outlet port. The disclosure of the above-mentioned Publication will be outlined with reference to Figs. 3 and 4 of the accompanying drawings. In Fig. 3, denoted by numeral 10 is an endless master magnetic tape. Designated by numeral 11 is a rectangular type tape container which contains folds of the master magnetic tape 10.

Designated by numeral 12 is a parts-mounting panel on which various parts of a duplicator unit are arranged and designated by numeral 13 is a base body on which the parts-mounting panel 12 is installed. In operation, the master magnetic tape 10 discharged from a tape outlet port 14b of the tape container 11 is led to a duplicating drum 16 which faces a duplicating magnetic head 15. The master magnetic tape 10 from the duplicating drum 16 is then pushed into the tape container 11 through a tape inlet port 14a. While, a blank or slave magnetic tape 18 released from a feeder reel 17 is led to the duplicating drum 16 and then to a retracting reel 19 to be retracted. During movement in a slit defined between the duplicating magnetic head 15 and the duplicating drum 16, the two tapes 10 and 18 are tightly pressed to each other with an aid of a pneumatic press means and the duplicating magnetic head 15 produces a duplicating magnetic field, so that a reversed pattern of the magnetic pattern of the master magnetic tape 10 is transferred to the slave magnetic tape 18. Designated by numerals 20 and 21 are air tensioning devices for applying the master magnetic tape 10 with a suitable tension, while designated by numerals 22 and 23 are air tensioning devices for applying the slave magnetic tape 18 with a suitable tension. Designated by numerals 24 and 25 are capstans for smoothing movement of the master magnetic tape 10. The tape container 11 is a separate member and comprises a rectangular vibration plate 26 and a fixed plate 27. The vibration plate 26 extends from the tape inlet port 14a toward the fixed plate 27 which is positioned near the tape outlet port 14b. The fixed plate 27 is an upper part of a channel structure 29 which is raised from a base board 28. The vibration plate 26 is mounted on two spaced spring plates 30a and 30b which are raised from a base plate 31. The base plate 31 is mounted on the base board 28 through coil springs 32. On the base plate 31, there is mounted through an angle member 33 an electromagnet 34, and to a lower surface of the vibration plate 26, there is fixed a yoke 35 which is actuated by the electromagnet 34. When, in operation, the electromagnet 34 is energized, the vibration plate 26 is vibrated at a given frequency and a given amplitude to smoothly convey folds of the master magnetic tape 10 toward the fixed plate 27. Because, at the fixed plate 27, the movement of the tape 10 is braked, the folds of the tape 10 are forced to accumulate in the container 11. This means that the tape containing capacity of the container 11 is increased.

In Fig. 4 a circular vibration plate 40 has outer and inner guide walls 41 and 42. Designated by numeral 43 is a pair of tape guides. The diameter "D" of the outer guide wall 41 is about 100cm and the diameter "d" of the inner guide wall 42 is about 10cm to 20cm. A fixed plate 44 is arranged at a downstream portion of the circular vibration plate 40. In order to provide the vibration plate 40 and the fixed plate 44 with flush upper surfaces, the circular vibration plate 40 is formed at its downstream portion with a recess into which a part of the fixed plate 44 is neatly received with a certain clearance therebetween. Designated by numerals 45a and 45b are guide walls possessed by the fixed plate 44, and designated by numeral 46 is an end wall possessed by the fixed plate 44. As shown, a tape inlet port 14a of the tape container faces the paired tape guides 43 and a tape outlet port 14b of the tape container is formed in the end wall 46 of the fixed plate 44.

However, even in the above-mentioned conventional tape containers, the measure applied thereto for increasing the tape containing capacity tends to cause a jumbled accumulation of the tape 10 in the container, which brings about damages of the tape 10. That is, when an excessively large amount of the tape 10 is accumulated in the container and/or when the tape 10 is left in the container for a long time, smoothed discharge of the tape 10 from the tape outlet port 14b is not made. In fact, under such condition, an abnormally big shock is applied to the tape 10 when the tape 10 is discharged from the tape outlet port 14b.

DE-U-8706716 discloses a vertically arranged tape container having a vertically extending shaft with an upper narrow inlet section diverging into a vertical mid section and ending with a bent horizontal end section. The tape, after entering the inlet falls freely down by gravity force and becomes collected in folds in the lower part of the shaft where a positively driven conveying means transports the collected folds towards the outlet port. The width of the shaft increases from the inlet port towards the mid section, remains constant along the mid section, again increases from the mid section to the lower section and decreases towards the outlet port. The tape does not contact the plain vertical side walls of the shaft until it has been collected in folds and is resting on the conveying means. The tape remains stretched or straight until it reaches the conveying means on which it is collected in folds.

US-A-4128198 discloses an endless tape container having a substantially horizontally arranged top plate, the tape inlet port and the tape outlet port being provided in alignment with the longitudinal centre line of said top plate. The top plate serves to convey the tape from the tape inlet port towards the tape outlet port with assistance of air blown along the top surface of the top plate (in the region of the tape inlet port) and air blown from below through nozzles in the top plate (in the region of the tape outlet port).

Vertically distant from the top plate a top glass cover is provided so that a closed tape loop receptacle is defined. Rearwardly diverging side wall portions extend from the tape inlet port toward a mid-section of the top plate where they are continued by rearwardly converging side-wall portions extending toward the tape outlet port.

It is a task of the invention to provide a tape container as disclosed for use with a video tape duplicator with which tape container a jumbled accumulation of the tape in the container and damages of the tape by a jumbled accumulation can be avoided, in which a longtime, smoothed discharge of the tape from the tape outlet port is assured, and in which abnormally big shocks in the tape can be avoided when the tape is discharged from the tape outlet port.

Said task is achieved with the features of claim 1.

When, under vibration of the vibration plate a tape is led into the tape inlet port, the same is folded at the relatively narrow entrance portion. At this entrance portion the tape makes folds thereof continuously one after another. The folds of the tape are then conveyed towards the fixed plate keeping their forms. At the fixed plate, the movement of the folds of the tape is braked and thus the folds are accumulated in a relatively large space. Undesired jumbled accumulation of the folds does not occur in the container. The folds, produced at the relatively narrow entrance portion are allowed to make a smoothed traveling in and along the accumulation passage whose width is gradually increased with increase of the distance from the tape inlet port. Thus, the tape is not damaged.

Preferred embodiments are contained in the depending claims.

Embodiments of the invention will be described with the help of the drawing, in which:

Fig. 1 is a plan view of an essential part of a discal type master tape container for use with a video tape duplicator, (a first embodiment);
Fig. 2 is a plan view of an essential part of a rectangular type master tape container for use with a video tape duplicator, (a second embodiment);
Fig. 3 is a perspective view of a video tape duplicator accompanying a conventional rectangular type master tape container; and
Fig. 4 is a plan view of an essential part of a conventional discal type master tape container.

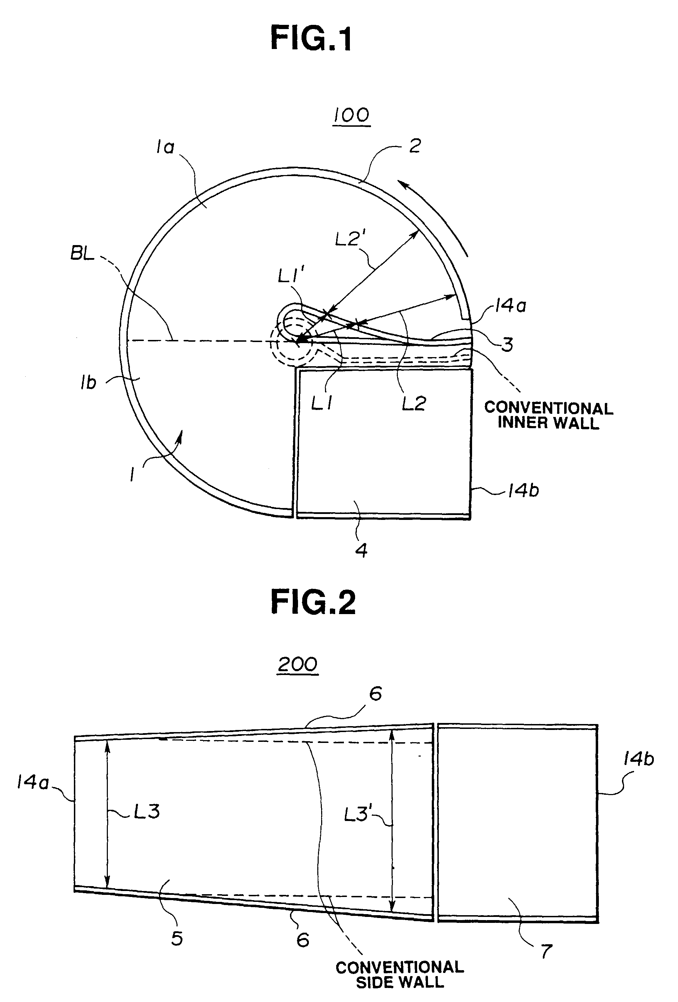

Referring to Fig. 1, there is shown a discal type master tape container 100 which is a first embodiment of the present invention. The container 100 of this embodiment is similar in construction to the above-mentioned conventional discal type tape container of Fig. 4. Like in the prior art, the container 100 is used with a video tape duplicator.

The discal type master tape container 100 comprises a circular vibration plate 1 which is arranged substantially horizontally. Although not shown in the drawing, a known drive mechanism is employed for vibrating the vibration plate 1. The vibration plate 1 has outer and inner guide walls 2 and 3. The outer guide wall 2 extends along the periphery of the plate 1 by about 270 degrees in angle and has one end terminating at a tape inlet port 14a. While, the inner guide wall 3 extends radially inwardly from the tape inlet port 14a and turns back near a center of the circular vibration plate 1, as shown. As will become apparent as the description proceeds, the inner and outer guide walls 3 and 2 are so shaped as to induce a smoothed traveling of the tape 10 in the container 100.

Similar to the conventional container of Fig. 4, a fixed plate 4 is arranged at a downstream portion of the circular vibration plate 1 in such a manner as not to contact the vibration plate 1, and the vibration plate 1 is formed at the downstream portion with a sectoral recess into which a part of the fixed plate 4 is neatly received with a certain clearance therebetween. Thus, the vibration plate 1 and the fixed plate 4 have flush upper surfaces. As is understood from the drawing, the downstream portion of the vibration plate 1 occupies about 1/4 in area (or 90 degrees in angle) of the vibration plate 1. In other words, the circular vibration plate 1 occupies about 3/4 in area (or 270 degrees in angle) for defining an arcuate tape accumulating passage therein. As shown, the fixed plate 4 has a tape outlet port 14b.

If desired, the downstream portion of the vibration plate 1 may be removed. In this modification, mounting of the fixed plate 4 is facilitated.

In this first embodiment, the following measure is employed.

That is, an upstream zone "1a" of the arcuate tape accumulating passage, which extends from the tape inlet port 14a by about 180 degrees in angle, has an upstream guide way (which is defined by the inner and outer guide walls 3 and 2) which is gradually increased in width as the distance from the tape inlet port 14a increases. While, a downstream zone "1b" of the arcuate tape accumulating passage, which extends from a downstream edge of the upstream zone "1a" by about 90 degrees in angle, has a downstream guide way (which is defined by the inner and outer guide walls 3 and 2) which has the same width therethrough. However, if desired, the downstream zone "1b" may have a downstream guide way which is gradually increased in width with increase of the distance from the downstream edge of the upstream zone "1a".

The border line between the upstream and downstream zones "1a" and "1b" is represented by reference "BL" in Fig. 1.

The dimensional feature of this first embodiment can be represented by the following inequalities.

In the upstream zone "1a"

$$L2/L1 < L2'/L1' \qquad (1)$$

wherein:

L1, L1': radial distance between the center of the circular vibration plate 1 and the inner guide wall 3 measured along a line extending radially outward from the center and intersecting with the inner guide wall 3

L2, L2': radially seen distance between the inner and outer guide walls 3 and 2 measured along another line extending radially outward from the center and intersecting the inner and outer guide walls 2,3

In the downstream zone "1b"

$$L2/L1 < L2'/L1' \qquad (2)$$

or

$$L2/L1 = L2'/L1' \qquad (3)$$

When, under vibration of the circular vibration plate 1, a tape 10 is led into the tape inlet port 14a, the same is folded at the relatively narrow entrance portion of the upstream zone "1a". Thus, at this entrance portion, the tape 10 makes folds thereof continuously one after another. The folds of the tape 10 are then conveyed along the upstream and downstream zones "1a" and "1b" toward the fixed plate 4 keeping their forms. At the fixed plate 4, the movement of the folds of the tape 10 is braked and thus the folds are accumulated at the downstream zone "1b" and the fixed plate 4 which are relatively large in space. Experiments have revealed that undesired jumbled accumulation of the folds of the tape 10 does not occur in the container 100. That is, the folds produced at the relatively narrow entrance portion of the upstream zone "1a" are allowed to make a smoothed traveling of the folded tape 10 in and along the arcuate passage of the container 100 whose width is gradually increased with increase of the distance from the tape inlet port 14a. Thus, the tape 10 is not damaged.

Referring to Fig. 2, there is shown a rectangular type master tape container 200 which is a second embodiment of the present invention. The container 200 of this embodiment is similar in construction to the above-mentioned conventional rectangular type tape container shown in Fig. 3. Like in the prior art, the container 200 is used with a video tape duplicator.

The rectangular type master tape container 200 comprises a generally rectangular vibration plate 5. Although not shown in the drawing, a known drive mechanism is used for vibrating the plate 5. The plate 5 has side guide walls 6 and 6. Thus, a straight tape accumulating passage is defined by the side guide walls 6 and 6. A fixed plate 7 is arranged downstream of the vibration plate 5. A tape inlet port and a tape outlet port are designated by references 14a and 14b.

In this second embodiment, the following measure is employed.

That is, the distance between the two side guide walls 6 and 6 is gradually increased with increase of distance from the tape inlet port 14a. In other words, the straight tape accumulating passage is gradually increased in width as the distance from the tape inlet port 14a increases.

This dimensional feature can be represented by the following inequality.

$$L3 < L3' \qquad (4)$$

wherein:

L3: distance between the side guide walls 6 and 6 measured at a first portion,

L3': distance between the side guide walls 6 and 6 measured at a second portion which is nearer to the fixed plate 7 than the first portion.

When, under vibration of the vibration plate 5, a tape 10 is led into the tape inlet port 14a, the same is folded at the relatively narrow entrance portion of the tape accumulating passage. Thus, at this entrance portion, the tape 10 makes folds thereof continuously one after another. The folds of the tape 10 are then conveyed along the straight tape accumulating passage toward the fixed plate 7 keeping their forms. At the fixed plate 7, the movement of the folds of the tape 10 is braked and thus the folds are accumulated at the downstream side of the passage which is relatively large in space. Due to the same reasons as that described hereinabove, a smoothed traveling of the folds of the tape 10 is obtained in the tape accumulating passage. Thus, the tape 10 is not damaged.

Although, in the above-mentioned two embodiments, the width of the tape accumulating passage is continuously increased, the width of the passage may be increased stepwisely.

**Claims**

1. An endless tape container, preferably for use with a video tape duplicator, (100, 200) comprising:

    a substantially horizontally arranged vibration plate (1, 5) having spaced side walls (2, 3; 6) between which a tape accumulating passage is defined,

means for defining at one end portion of said vibration plate (1, 5) a tape inlet port (14a) through which an endless tape (10) is inserted into said tape accumulating passage;

a fixed plate (7, 4) substantially horizontally arranged downstream of said vibration plate (1, 5), so that both plates (7, 4, 1, 5) have flush upper surfaces;

means for defining at said fixed plate (7, 4) a tape outlet port (14b) through which said endless tape (10) is discharged to the outside from said tape accumulating passage; and

means (33, 34) for vibrating said vibration plate (1, 5) thereby to convey said endless tape (10) downstream from said tape inlet port (14a) toward said fixed plate (7, 4) **characterised** in

that the horizontal width of said tape accumulating passage on said vibration plate (1, 5) is gradually increased with increase of distance from said tape inlet port (14a).

2. Tape container as in claim 1, **characterised**

by a circular vibration plate (1) defining an arcuate tape accumulating passage, the width of which is gradually increased with increase of distance from said tape inlet port (14a);

by an outer side wall (2) extending along the periphery of said vibration plate (1) by about 270 degrees in angle and having one end terminating at said tape inlet port (14a), said outer side wall (2) defining an outer periphery of said arcuate tape accumulating passage; and

by an inner side guide wall (3) extending radially inwardly from the tape inlet port (14a) and turning back near the centre of the circular vibration plate (1), said inner side guide wall (3) defining an inner periphery of said arcuate tape accumulating passage

3. Tape container as in claim 2, **characterised** in that the arcuate tape accumulating passage comprises an upstream zone (la) extending from said tape inlet port (14a) by about 180 degrees in angle and having an upstream guide way, and a downstream zone (1b) extending from a downstream edge of the upstream zone (la) by about 90 degrees in angle and having a downstream guide way which leads to said fixed plate (4), the width of at least the upstream guideway gradually is increased as the distance from the tape inlet port (14a) increases.

4. Tape container as in claim 3, **characterised** in that said downstream guide way also is gradually increased in width with increase of the distance from the downstream edge of the upstream zone (1a).

5. Tape container as in claim 2, **characterised** in that the fixed plate (4) continuing the downstream portion of the circular vibration plate (1) occupies about ¼ of the vibration plate (1), so that the circular vibration plate (1) occupies about ¾ in area for defining said arcuate tape accumulating passage with gradually increasing width.

6. Tape container as in claim 1, **characterised** by:

a generally rectangular vibration plate (5) with the tape inlet port (14a) through which an endless master tape (10) is inserted, said vibration plate (5), having an elongate tape accumulating passage, the width of which is gradually increased with increase of distance from said tape inlet port (14a);

side guide walls (6) raised from lateral edges of said generally rectangular vibration plate (5) thereby to define there between said elongate tape accumulating passage, each side guide wall (6) having one end terminating at said tape inlet port (14a).

**Patentansprüche**

1. Endlos-Bandcontainer (100, 200), vorzugsweise zur Verwendung mit einem Videoband-Duplikator, mit:

einer im wesentlichen horizontal angeordneten Vibrationsplatte (1, 5) mit beabstandeten Seitenwänden (2, 3; 6), zwischen denen eine Band-Sammelpassage definiert wird,

Einrichtungen zum Definieren einer Bandeinlaßöffnung (14a) an einem Endabschnitt der Vibrationsplatte (1, 5), durch welche ein endloses Band (10) in die besagte Band-Sammelpassage einführbar ist;

einer fixierten Platte (7, 4), die stromab der Vibrationsplatte (1, 5) im wesentlichen horizontal angeordnet ist, derart, daß beide Platten (7, 4, 1, 5) bündige Oberflächen haben;

Einrichtungen zum Definieren einer Band-Auslaßöffnung (14b) an der fixierten Platte (7, 4), durch welche das endlose Band (10) aus der Band-Sammelpassage nach außen ausgebbar ist; und

Einrichtungen (33, 34) zum Vibrieren der Vibrationsplatte (1, 5), um auf diese Weise das endlose Band (10) von der Bandeinlaßöffnung (14a) stromab in Richtung zur fixierten Platte (7, 4) zu fördern, **dadurch gekennzeichnet,**

daß die horizontale Weite der Band-Sammelpassage auf der Vibrationsplatte (1, 5) sich graduell und mit zunehmendem Abstand von der Bandeinlaßöffnung (14a) vergrößert.

2. Endlos-Bandcontainer nach Anspruch 1, **gekennzeichnet durch**,

eine kreisförmige Vibrationsplatte (1), die eine bogenförmige Band-Sammelpassage definiert, deren Weite sich graduell mit zunehmendem Abstand von der Band-Einlaßöffnung (14a) steigert;

eine äußere Seitenwand (2), die sich entlang der Peripherie der Vibrationsplatte (1) über in etwa 270 Winkelgrade erstreckt und ein Ende besitzt, das an der Band-Einlaß-Öffnung (14a) ausläuft, wobei die äußere Seitenwand (2) eine äußere Peripherie der bogenförmigen Band-Sammelpassage definiert; und

eine innere Seitenführungswand (3), die sich von der Band-Einlaßöffnung (14a) radial nach innen erstreckt und nahe dem Zentrum der kreisförmigen Vibrationsplatte (1) umkehrt und eine innere Peripherie der bogenförmigen Band-Sammelpassage defniert.

3. Endlosband-Container nach Anspruch 2, **dadurch gekennzeichnet**, daß die bogenförmige Band-Sammelpassage eine Stromaufzone (1a) und eine Stromabzone (1b) aufweist, von denen sich die Stromaufzone (1a) von der Band-Einlaßöffnung (14a) über in etwa 180 Winkelgrade erstreckt und einen Stromauf-Führungsweg besitzt, während die Stromabzone (1b) sich von einem Stromabrand der Stromaufzone (1a) über in etwa 90 Winkelgrade erstreckt und einen Stromab-Führungsweg aufweist, der bis zur fixierten Platte (4) führt, wobei die Weite zumindest des Stromauf-Führungswegs mit zunehmendem Abstand von der Band-Einlaßöffnung (14a) graduell zunimmt.

4. Endlosband-Container gemäß Anspruch 3, **dadurch gekennzeichnet,** daß die Weite des Stromab-Führungswegs ebenfalls mit zunehmendem Abstand vom Stromabrand der Stromaufzone (1a) graduell zunimmt.

5. Endlosband-Container gemäß Anspruch 2, **dadurch gekennzeichnet**, daß die fixierte Platte (4), die den Stromab-Abschnitt der kreisförmigen Vibrationsplatte (1) fortsetzt, etwa ein Viertel der Vibrationsplatte (1) ausfüllt, so daß die kreisförmige Vibrationsplatte (1) ca. drei Viertel der Fläche zum Definieren der mit graduell zunehmender Weite ausgebildeten, bogenförmigen Band-Sammelpassage beansprucht.

6. Endlosband-Container gemäß Anspruch 1, **gekennzeichnet durch:**

eine im wesentlichen viereckige Vibrationsplatte (5) mit der Band-Einlaßöffnung (14a), durch welche ein endloses Masterband (10) einführbar ist, wobei die Vibrationsplatte (5) eine langgestreckte Band-Sammelpassage besitzt, deren Weite graduell zunimmt mit zunehmendem Abstand von der Band-Einlaßöffnung (14a); und

seitlich Führungswände (6), die sich von Querrändem der im wesentlichen viereckigen Vibrationsplatte (5) erheben und zwischen sich die langgestreckte Band-Sammelpassage definieren, wobei jede seitliche Führungswand (6) ein Ende besitzt, das an der Band-Einlaßöffnung (14a) ausläuft.

## Revendications

1. Récipient de bande sans fin, de préférence pour utilisation avec un duplicateur de bande vidéo, (100, 200) comprenant :

une plaque de vibration agencée sensiblement horizontalement (1, 5) ayant des parois latérales espacées (2, 3; 6) entre lesquelles est défini un passage d'accumulation de bande, un moyen pour définir à une portion d'extrémité de ladite plaque de vibration (1, 5) un orifice d'entrée de bande (14a) à travers lequel une bande sans fin (10) est insérée dans ledit passage d'accumulation de bande; une plaque fixe (7, 4) agencée sensiblement horizontalement en aval de ladite plaque de vibration (1, 5), de sorte que les deux plaques (7, 4, 1, 5) ont des surfaces supérieures en affleurement; un moyen pour définir à ladite plaque fixe (7, 4) un orifice de sortie de bande (14b) à travers lequel ladite bande sans fin (10) est déchargée à l'extérieur du passage d'accumulation de bande; et

un moyen (33, 34) pour faire vibrer ladite plaque de vibration (1, 5) pour transporter de la sorte ladite bande sans fin (10) en aval dudit orifice d'entrée de bande (14a) vers ladite plaque fixe (7, 4) **caractérisé en ce que**

la largeur horizontale dudit passage d'accumulation de bande sur ladite plaque de vibration (1, 5) est graduellement augmentée avec l'augmentation de la distance à partir de l'orifice d'entrée de bande (14a).

2. Récipient de bande comme dans la revendication 1, **caractérisé**

par une plaque de vibration circulaire (1) définissant un passage d'accumulation de bande arqué, dont la largeur est graduellement augmentée avec l'augmentation de la distance à partir de l'orifice d'entrée de bande (14a); par une paroi latérale externe (2) s'étendant le long de la périphérie de ladite plaque de vibration d'environ 270 degrés d'angle et ayant une extrémité se terminant audit orifice d'entrée de bande (1a), ladite paroi latérale externe (2) définissant une périphérie externe dudit passage d'accumulation de bande arqué; et par une paroi de guidage latérale interne (3) s'étendant radialement vers l'intérieur à partir de l'orifice d'entrée de bande (14a) et retournant près du centre de la plaque de vibration circulaire (1), ladite paroi de guidage latérale interne (3) définissant une périphérie interne dudit passage d'accumulation de bande arqué.

3. Récipient de bande comme dans la revendication 2, **caractérisé**

en ce que le passage d'accumulation de bande arqué comprend une zone amont (1a) s'étendant de l'orifice d'entrée de bande précité (14a) d'environ 180 degrés d'angle et ayant une voie de guidage amont et une zone aval (1b) s'étendant à partir d'un bord aval de la zone amont (1a) d'environ 90 degrés d'angle et ayant une voie de guidage aval qui conduit à la plaque fixe précitée (4), la largeur d'au moins la voie de guidage amont est graduellement augmentée comme la distance d'orifice d'entrée de bande (14a) augmente.

4. Récipient de bande comme dans la revendication 3, **caractérisé**

en ce que la voie de guidage avale précitée est graduellement augmentée en largeur avec l'augmentation de la distance à partir du bord aval de la zone amont (1a).

5. Récipient de bande comme dans la revendication 2, **caractérisé**

en ce que la plaque fixe (4) continuant la portion aval de la plaque de vibration circulaire (1) occupe environ 1/4 de la plaque de vibration (1), de sorte que la plaque de vibration circulaire (1) occupe environ 3/4 en surface pour définir le passage d'accumulation de bande arqué précité avec la largeur augmentant graduellement.

6. Récipient de bande comme dans la revendication 1, **caractérisé** par :

une plaque de vibration généralement rectangulaire (5) avec l'orifice d'entrée de bande (14a) à travers lequel est insérée une bande maître sans fin (10), ladite plaque de vibration (5) ayant un passage d'accumulation de bande allongé, dont la largeur est graduellement augmentée avec l'augmentation de la distance à partir de l'orifice d'entrée de bande précité (14a); des parois de guidage latérales (6) élevées à partir des bords latéraux de la plaque de vibration généralement rectangulaire (5) pour définir de la sorte entre elles le passage d'accumulation de bande allongé, chaque paroi de guidage latérale (6) ayant une extrémité se terminant à l'orifice d'entrée de bande (14a).

# FIG.1

# FIG.2

# FIG.3
# (PRIOR ART)

# FIG.4
# (PRIOR ART)